# EUROPEAN PATENT APPLICATION

(11) **EP 4 821 353 A1**
(43) Date of publication of application: **14.10.2026**
(21) Application number: 26168137.3
(22) Date of filing: 26.03.2026
(51) Int. Cl.: A01K 89/01, A01K 89/015

(54) **ANTI-REVERSE BEARING FOR FISHING REEL**

(30) Priority: 28.03.2025 US 202519094140
(71) Applicant: Pure Fishing, Inc., Spirit Lake, IA 51360 (US)
(72) Inventor: IVIE, Cameron, IRMO, SC, 29063 (US); DENG, Shao, HUANGGE TOWN (CN); ZANG, Guo, Hua, GUANGZHOU (CN)
(74) Representative: Cabinet Beau de Loménie

(57) **Abstract**

An anti-reverse bearing assembly (500) for a fishing reel includes a clutch (502) and rollers (518) that cooperate to allow rotation of an inner ring (504) in a first rotational direction and to limit rotation of the inner ring in a second rotational direction. The rollers are moveable radially, and the clutch includes anti-rotation elements (512) that create an anti-rotation interface with a housing (600) of the reel in the axial direction. The radial direction of the roller movement is offset from the axial anti-rotation interface, reducing tolerance stack between components of the anti-reverse bearing. This may reduce the risk of uneven or maldistributed loading on the inner ring via the rollers, slippage of the rollers, and/or noise. Additionally, providing the anti-rotation interface in the axial direction can allow for a more compactly sized housing that accommodates the anti-reverse bearing assembly.

## Description

### BACKGROUND

Fishing reels include a spool and a mechanism for winding a fishing line on the spool during retrieval. A user may wind the fishing line on the spool via a rotatable handle. Components driven by the handle may be supported by bearings in a housing of the reel.

Some bearings may include an anti-reverse clutch to limit or prevent inadvertent or premature unwinding of the fishing line from the spool. Such anti-reverse bearings have utilized features to limit or prevent undesired rotational movement of a clutch relative to the housing of the reel. The anti-reverse features may be positioned on the radial periphery of the clutch, either resulting in complex shapes and/or in increased diameter of the clutch. Complex clutch shapes make it difficult to limit the undesired rotational movement of the clutch without play. Clutches having larger diameters increase the size and footprint of the reel. An outer radial connection between the clutch and the housing of the reel may also over constrain the anti-reverse bearing, which negatively affects alignment of the bearing.

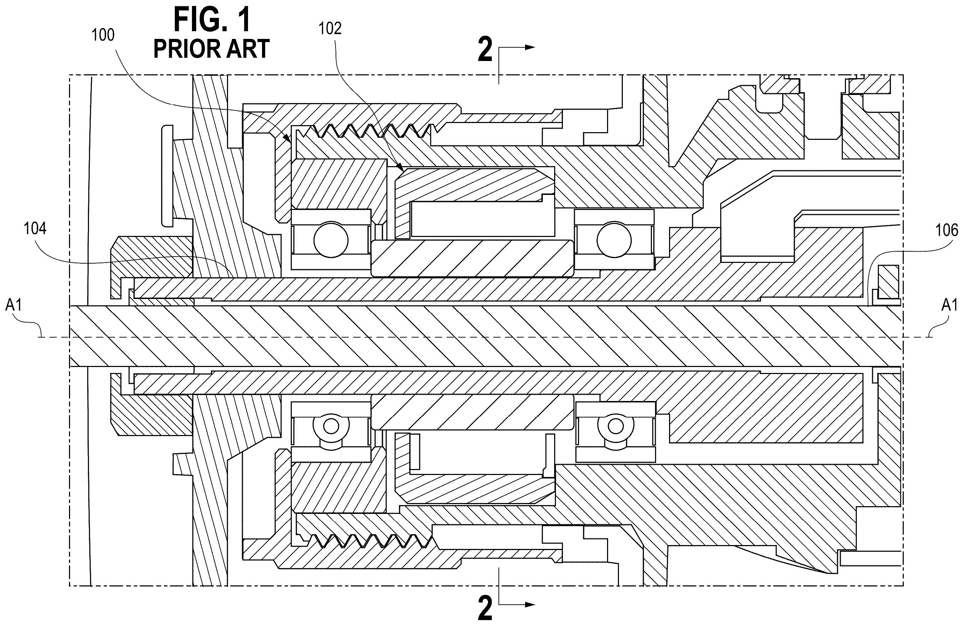

Fig. 1 depicts a handle driven mechanism 100 that can be used in a fishing reel and includes a prior art anti-reverse bearing 102. The handle driven mechanism 100 may include a pinion 104 and a spindle 106 extending axially through the pinion 104. In a spinning reel, a rotatable handle can be used to drive rotation of the pinion 104 about a rotational axis A1 via gear transmission as is known in the art. An oscillating means may transmit rotation of the handle to axial oscillation of the spindle 106 relative to the axis A1 as is known in the art. During retrieval, the pinion 104 can be rotated in a first rotational direction about the axis A1 in which a rotor assembly having a bail system is driven to wind a fishline line on a spool that oscillates with the spindle 106. The anti-reverse bearing 102 operates to reduce the risk of backlash and/or inadvertent or premature unwinding of the spool by substantially limiting or restricting rotation of the pinion 104 in a second, opposite rotational direction about the axis A1 corresponding to the fishing line becoming unwound. The bail system can be placed in an open or disengaged state which allows the fishing line to freely unwind from the spool as needed during casting.

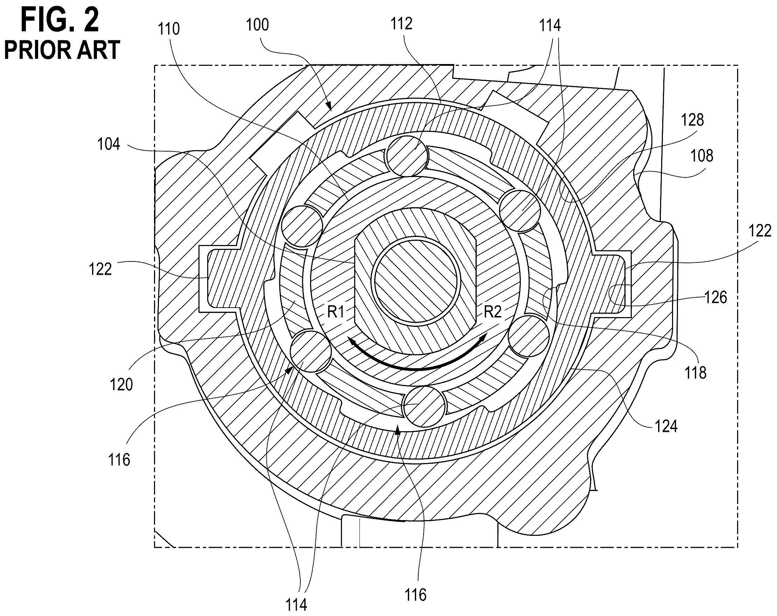

Referring to Fig. 2, the anti-reverse bearing 102 may be positioned within a housing 108 of the fishing reel. The anti-reverse bearing 102 may include an inner ring 110, a clutch 112 positioned radially outward of the inner ring 110, and rollers 114 between the inner ring 110 and the clutch 112. The pinion 104 may be keyed within a center keyway of the inner ring 110 such that the inner ring co-rotates with the pinion. The rollers 114 may be arranged circumferentially between the inner ring 110 and the clutch 112. Each roller 114 may be rotatable via engagement between the inner ring 110 and the clutch 112.

Cam slots 116 for the rollers 114 may be defined in an inner circumferential surface 118 of the clutch 112. The cam slots 116 may control radial movement of the rollers 114 between the inner ring 110 and the clutch 112. The inner circumferential surface 118 of the clutch 112 may be ramped towards the inner ring 110 between the ends of each cam slot 116. When the pinion 104 and the inner ring 110 rotate in the first rotational direction, indicated by R1, the rollers 114 may move in their respective cam slots 116 radially outward relative to and away from the inner ring. The radially outward movement of the rollers 114 may reduce friction between the rollers and the inner ring 110, allowing the inner ring and the pinion 104 to rotate in the first rotational direction R1. When the pinion 104 and the inner ring 110 rotate in the second rotational direction, indicated by R2, the rollers 114 may move in their respective cam slots 116 radially inward relative to and towards the inner ring. The radially inward movement of the rollers 114 may increase friction between the rollers and the inner ring 110, and the rollers may be wedged between the clutch 112 and the inner ring, substantially limiting or restricting rotation of the inner ring and the pinion 104. In this way, the inner ring 110 and the pinion 104 may be substantially limited or restricted from rotating in the second rotational direction R2. Each roller 114 may be supported in the respective cam slot 116 via a corresponding pin holder 120. The pin holders 120 may be operable to selectively bias the corresponding rollers 114 into engagement between the inner ring 110 and the clutch 112.

The clutch 112 may also include anti-rotation ears 122 that protrude radially outward from an outer circumferential edge 124. The ears 122 may be received in corresponding anti-rotation slots 126 defined in an inner radial surface 128 of the housing 108. The ears 122 may engage within the slots 126 to limit or restrict rotation of the clutch 112 relative to the housing 108.

The anti-reverse bearing 102 of Figs. 1 and 2 may present various disadvantages. For example, the ears 122 and the slots 126 require machining with very low tolerance to minimize play of the clutch 112. The cam slots 116, the ears 122, and the slots 126 also present the risk of tolerance stack in the radial direction, which makes it difficult to maintain alignment of the anti-reverse bearing 102 components. Any misalignment between components of the anti-reverse bearing 102, such as concentric misalignment between the clutch 112, the rollers 114, and the inner ring 110, could negatively impact performance via uneven or maldistributed loading of the rollers on the inner ring, cause slippage of the rollers, and/or create noise during operation. The radially protruding ears 122 may additionally or alternatively increase the diameter of the clutch 112, thereby increasing the size requirements for the housing 108 to accommodate the clutch 112 and making the reel larger as a result.

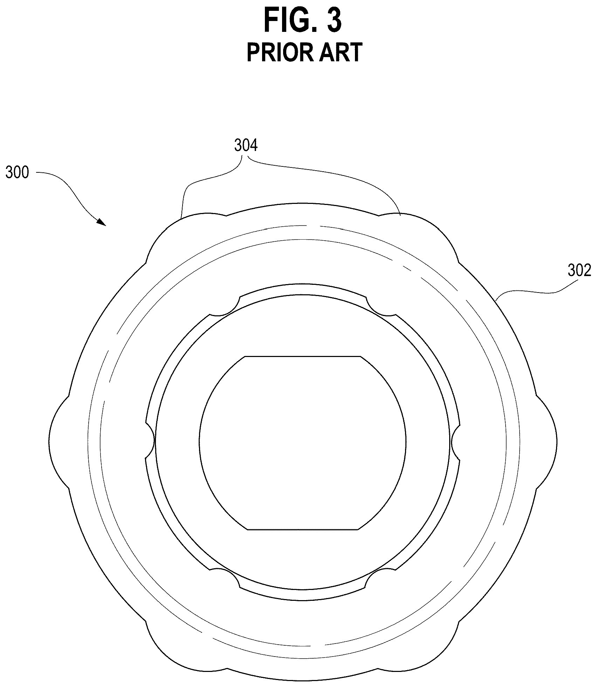

Fig. 3 depicts another prior art anti-reverse bearing 300 that includes a clutch 302, which may operate similar to the clutch 112. The clutch 302 includes radial protruding, anti-rotation lobes 304 that may operate similar to the ears 122 of the clutch 112. The lobes 304 may reduce the diameter of the clutch 302 relative to the clutch 112, but are geometrically complex relative to the ears 122. Machining the lobes 304 and/or anti-rotation slots in a housing to accommodate the lobes 304 may be a difficult endeavor. It may be difficult to adequately machine the lobes 304 and/or the corresponding anti-rotation slots within tolerance, which may result in an unacceptable amount of clearance between the lobes 304 and the corresponding anti-rotation slots. Such clearance may lead to undesired play of the clutch 302 and limit the effectiveness of the clutch 302 to prevent rotation of the pinion in the desired rotational direction. Also, the geometrical matching between the lobes 304 and the corresponding anti-rotation slots may determine alignment, e.g., concentric alignment, between the components of the anti-reverse bearing 300. As such, any clearance between the lobes 304 and the corresponding anti-rotation slot may present the risk of misalignment of the components of the anti-reverse bearing 300. On the other hand, creating a tighter fit between the lobes 304 and the corresponding anti-rotation slots may also increase the risk of tolerance stack that negatively impacts alignment of the components of the anti-reverse bearing 300.

Some or all the disadvantages of the anti-reverse bearings described with reference to Figs. 1-3 may be present in other prior art anti-reverse bearings as well. For example, anti-reverse bearings in which the clutch is rigidly fixed to the housing, via fasteners or another fixing means, may also have misalignment issues between components of the anti-reverse bearing which can cause uneven or maldistributed loading, slippage of the rollers, and/or noise.

### SUMMARY

The purpose of the anti-reverse bearing for a fishing reel hereof is to reduce the size of the bearing and/or improve the alignment between the bearing and a rotating component of the reel while providing reliable anti-reverse functionality. The anti-reverse bearing hereof may also provide quieter operation with less backlash. In some embodiments, the anti-reverse bearing is located radially between a rotating component of the reel and a housing of the reel. The anti-reverse bearing may include an inner ring keyed on the rotating component, a clutch, and rollers positioned between the clutch and the inner ring. The clutch and the rollers may cooperate to allow rotation of the inner ring and rotating component in a first rotational direction and to limit rotation of the inner ring and rotating component in a second rotational direction. The rollers may be moveable radially. The clutch may include anti-rotation elements that create an anti-rotation interface with a housing of the reel in the axial direction. The radial direction of the roller movement is offset from the axial anti-rotation interface, reducing tolerance stack between components of the anti-reverse bearing. This may reduce the risk of uneven or maldistributed loading on the inner ring via the rollers, slippage of the rollers, and/or noise. Additionally, providing the anti-rotation interface in the axial direction can allow for a more compactly sized housing that accommodates the anti-reverse bearing.

### BRIEF DESCRIPTION OF THE DRAWINGS

For a better understanding of the various aspects of the present disclosure, reference may be made to the accompanying drawings in which:
Fig. 1 is a cross-section of a handle driven mechanism of a fishing reel that includes a prior art anti-reverse bearing;
Fig. 2 is a view of the handle driven mechanism along line 2-2 in Fig. 1;
Fig. 3 is a front view of another prior art anti-reverse bearing assembly;
Fig. 4 is a perspective view of an exemplary fishing reel;
Fig. 5 is a cross-section of the fishing reel of Fig. 4, showing a handle driven mechanism thereof;
Fig. 6 is a perspective view of an anti-reverse bearing assembly of the handle driven mechanism of Fig. 5, incorporating aspects of the present disclosure;
Fig. 7 is a front perspective view of a housing that accommodates the anti-reverse bearing assembly of Fig. 5;
Fig. 8 is a magnified view of the handle driven mechanism of Fig. 5; and
Fig. 9 is a perspective view of another fishing reel that may incorporate aspects of the present disclosure.

Like reference numerals are used in the drawings to indicate like parts.

While the disclosure is susceptible to various modifications and alternative forms, specific embodiments thereof are shown by way of example in the drawing and will herein be described in detail. It should be understood, however, that the drawings and detailed description presented herein are not intended to limit the disclosure to the particular embodiment disclosed, but on the contrary, the intention is to cover all modifications, equivalents, and alternatives falling within the spirit and scope of the present disclosure.

### DETAILED DESCRIPTION

Aspects of the present disclosure will now be described with reference to the drawing figures, in which like reference numerals refer to like parts throughout. For purposes of clarity in illustrating the characteristics of the present disclosure, proportional relationships of the elements have not necessarily been maintained in the drawing figures. It will be understood that any dimensions included in the figures are simply provided as examples and dimensions other than those provided therein are also within the scope of this disclosure.

This description references specific embodiments in which the aspects of the present disclosure can be practiced. The embodiments are intended to describe the aspects in sufficient detail to enable those skilled in the art to practice the same. Other embodiments can be utilized and changes can be made without departing from the scope of the present disclosure. The description is, therefore, not to be taken in a limiting sense and shall not limit the scope of equivalents to which the appended claims are entitled.

Described herein are anti-reverse bearings that can be used to limit or prevent undesired or inadvertent or premature unwinding of a fishing reel. The anti-reverse bearings may include a clutch that allows a handle to drive rotation of the reel in a winding direction and operates to limit or prevent inadvertent or premature rotation of the reel in an unwinding direction. The clutch has anti-rotation elements that engage with a housing of the reel at an axial interface, relative to a rotational axis of the reel. The clutch also has clutching components, such as rollers and cam slots, that operate in a radial direction relative to the rotational axis to control rotation of the reel via operation of the handle. Tolerance stack between components of the anti-reverse bearing may be reduced by providing the anti-rotation interface in the axial direction and the clutch interface in the radial direction. This in turn may reduce the risk of uneven or maldistributed loading of the clutch components on the reel, slippage of the clutch components, and/or noise. Additionally, the anti-reverse bearings may have a reduced diameter, thereby reducing the size requirement for the housing that accommodates the anti-reverse bearing. In this way, the anti-reverse bearings of this disclosure can minimize play, or undesired rotational movement, of the clutch, while allowing improved alignment of the clutch components and rotating reel components in a compactly sized housing. These and other advantages will be described and/or become apparent when reading the following description.

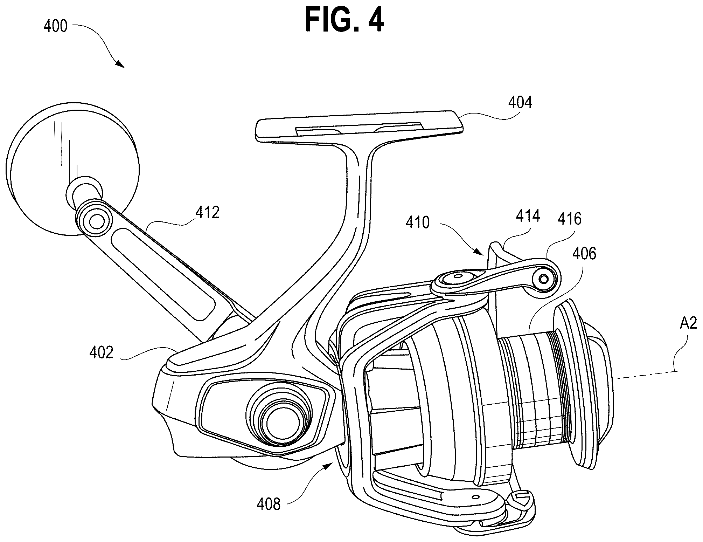

Referring to Fig. 4, a fishing reel is indicated generally at 400. The fishing reel 400 in this embodiment may be a spinning reel. In other embodiments, the fishing reel may include another type of fishing reel, such as a baitcasting reel. The fishing reel 400 may include a reel body 402 and a reel foot 404 connected to the reel body. The reel foot 404 may be attachable to a fishing rod. The fishing reel 400 may also include a spool 406 and a rotor assembly 408 each moveably coupled to the reel body 402. The rotor assembly 408 may include a bail system 410 operable to wind a fishing line (not shown) on the spool 406. The rotor assembly 408 and the bail system 410 may be rotatable around the spool 406 about a rotational axis A2 extended in a longitudinal direction. The spool 406 may be moveable relative to the rotational axis A2 in the longitudinal direction. The longitudinal direction may also be referred to as an axial direction. More broadly, directional terms such as "axial," "radial," "circumferential," and the like, as used herein, may be relative to the rotational axis A2 or an axis parallel to the rotational axis A2.

The fishing reel 400 may include a handle 412 that can be rotated by a user for winding the fishing line on the spool 406 via the rotor assembly 408 and bail system 410. As is known in the art, rotation of the handle 412 may drive axial oscillation of the spool 406 and rotation of the rotor assembly 408 and the bail system 410 around the oscillating spool 406. For example, the reel body 402 may house a gear transmission to translate rotation of the handle 412 into rotation of the rotor assembly 408 and the bail system 410 and an oscillating means to translate rotation of the handle 412 into axial movement of the spool 406.

The bail system 410 may include a bail arm 414 that is moveable between a closed or engaged position (shown in Fig. 4) and an open or disengaged position (not shown). When the bail arm 414 is in the closed position, the fishing line may be tensioned and disposed in a groove of a roller guide 416 of the bail system 410. Rotating the rotor assembly 408 and the bail system 410 when the bail arm 414 is in the closed position causes the tensioned line to rotate around and wind on the spool 406. Concurrently, the spool 406 can oscillate axially to ensure that the line is evenly wound on the spool. When the bail arm 414 is in the open position, the tension is released from the fishing line which allows the fishing line to freely unwind from the spool 406 as needed during casting.

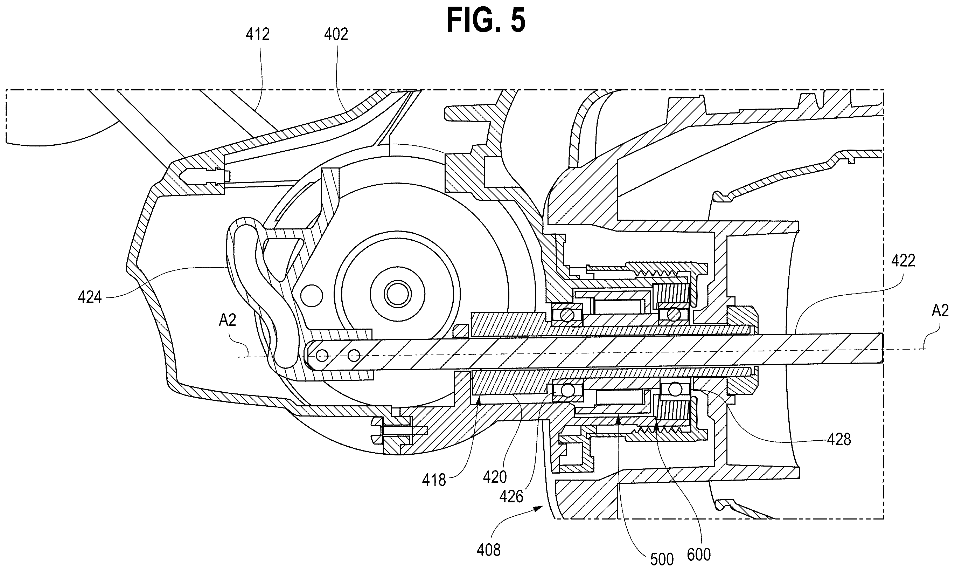

Referring to Fig. 5, the fishing reel 400 may include a handle driven mechanism 418, also referred to as a handle driven assembly, operable to drive movement of the spool 406, the rotor assembly 408, and the bail system 410 in response to rotation of the handle 412 as described above with respect to Fig. 4. The handle driven mechanism 418 may include a rotating component, such as a pinion 420, that is coupled to the rotor assembly 408. The pinion 420 may rotate about the rotational axis A2 in response to rotation of the handle 412 via a gear transmission (not shown) housed in the reel body 402. Rotation of the pinion 420 may drive rotation of the rotor assembly 408. The handle driven mechanism 418 may also include an axially oscillating component, such as a spindle 422, that is coupled to the spool 406. The spindle 422 may extend through the pinion 420 relative to the axis A2. The spindle 422 may oscillate axially along the axis A2 in response to rotation of the handle 412 via an oscillating means 424 housed in the reel body 402. Oscillation of the spindle 422 may drive oscillation of the spool 406.

The pinion 420 and the spindle 422 may each extend in the axial direction through a housing 600 of the handle driven mechanism 418. The housing 600 may be joined to the reel body 402 and extends axially therefrom. The housing 600 may be coupled to the reel body 402 or integrated with the reel body. The pinion 420 may be rotatably supported in the housing 600 via bearing assemblies 426, 428. The bearing assemblies 426, 428 may each include ball bearings. Alternatively, any suitable bearing (e.g., a journal bearing or a bushing) can be used for rotatably supporting the pinion 420.

The handle driven mechanism 418 may also include an anti-reverse bearing assembly 500, also referred to as an anti-reverse bearing. The anti-reverse bearing 500 may be positioned in the housing 600 radially outward from the pinion 420 and may surround the pinion. In some embodiments, the anti-reverse bearing 500 may be positioned between the bearing assemblies 426, 428. The anti-reverse bearing 500 may limit or restrict rotation of the pinion 420, and thereby the rotor assembly 408, in an unwinding direction while allowing the pinion and the rotor assembly to rotate in a winding direction. The anti-reverse bearing 500 may thereby operate to limit or prevent inadvertent or premature unwinding of the line from the spool 406. For example, the anti-reverse bearing 500 may limit or prevent the user from inadvertently rotating the handle 412 in the unwinding direction. Additionally or alternatively, the anti-reverse bearing 500 may limit or prevent the tensioned line from causing the spool to unwind when the bail arm 114 is in the closed position. That is, the anti-reverse bearing 500 may counteract a rotational force that may be applied to the rotor assembly 408 in the unwinding direction via the line under tension, and may limit or prevent the tensioned line from rotating the rotor assembly in this direction which could otherwise cause inadvertent or premature unwinding of the line from the spool 406.

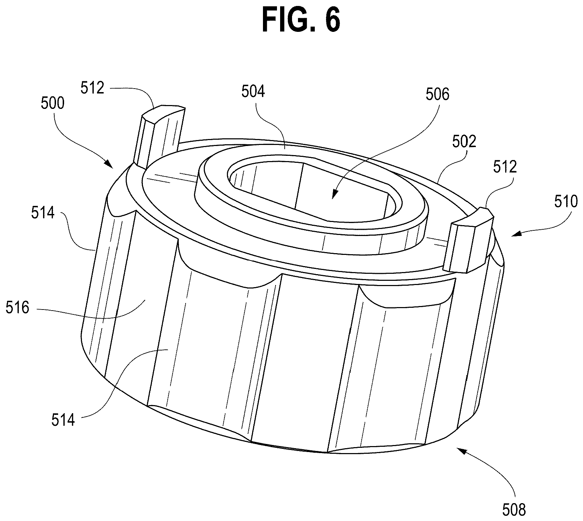

Fig. 6 depicts the anti-reverse bearing 500 in isolation. In addition to limiting or preventing inadvertent or premature unwinding of the spool 406, the anti-reverse bearing 500 can also overcome some or all the disadvantages of the prior art anti-reverse bearings described above. For example, the anti-reverse bearing 500 may reduce the risk of misalignment through controlled tolerance stack between components of the anti-reverse bearing and/or may reduce the size requirement of the housing 600 that accommodates the anti-reverse bearing.

The anti-reverse bearing 500 may include a clutch 502 and an inner ring 504 positioned radially inward of the clutch. The clutch 502 and the inner ring 504 may each have a substantially cylindrical profile. The inner ring 504 may include a keyway 506 that receives a rotating member, such as the pinion 420, of the handle driven mechanism 418 of Fig. 5. The rotating member, e.g. the pinion 420, may be keyed within the keyway 506 such that the inner ring 504 co-rotates with the rotating member during rotational operation of the handle of the fishing reel.

The clutch 502 may extend axially, relative to the rotational axis of the inner ring 504, between a first axial end 508 and a second axial end 510. The clutch 502 may include one or more anti-rotation elements 512 positioned at the second axial end 510. In the illustrated example, the clutch 502 may include two anti-rotation elements 512. The anti-rotation elements 512 may be circumferentially spaced apart at 180° intervals. More or fewer anti-rotation elements 512, such as one or more than two anti-rotation elements, may be included in some embodiments. The circumferential spacing of the anti-rotation elements may vary. In some embodiments, the anti-rotation elements may be circumferentially spaced at regular intervals. In some embodiments, some or all the anti-rotation elements may be circumferentially spaced at irregular intervals.

The anti-rotation elements 512 may be male elements that extend axially beyond the second axial end 510. For example, the male anti-rotation elements 512 may include keys, protrusions, tabs, and the like, that extend axially beyond the second axial end 510. In some embodiments, one or more of the anti-rotation elements 512 may be female elements depending axially inwardly into the second axial end 510. For example, the female anti-rotation elements 512 may include slots, keyways, grooves, recesses, and the like. In some embodiments, the anti-rotation elements 512 may include both male and female elements.

The clutch 502 may also include positioning elements 514 positioned along a circumferential edge 516 of the clutch. The positioning elements 514 may be male elements that extend radially outward from the circumferential edge 516. For example, the male positioning elements 514 may include lobes, arcs, tabs, keys, protrusions, and the like, that extend radially outward from the circumferential edge 516. In some embodiments, one or more of the positioning elements 514 may be female elements depending radially inwardly into the circumferential edge 516. For example, the female positioning elements 514 may include slots, keyways, grooves, recesses, and the like. In some embodiments, the positioning elements 514 may include both male and female elements. In some embodiments, the positioning elements 514 may be omitted.

In some embodiments, the clutch 502 may be formed as a one-piece unit in which the anti-rotation elements 512 (and, if included, the positioning elements 514) are made integral with the clutch. For example, the clutch 502 may be formed as a single extruded, cast, or drawn component, and the anti-rotation elements 512 (and, if included, the positioning elements 514) may be machined into the clutch.

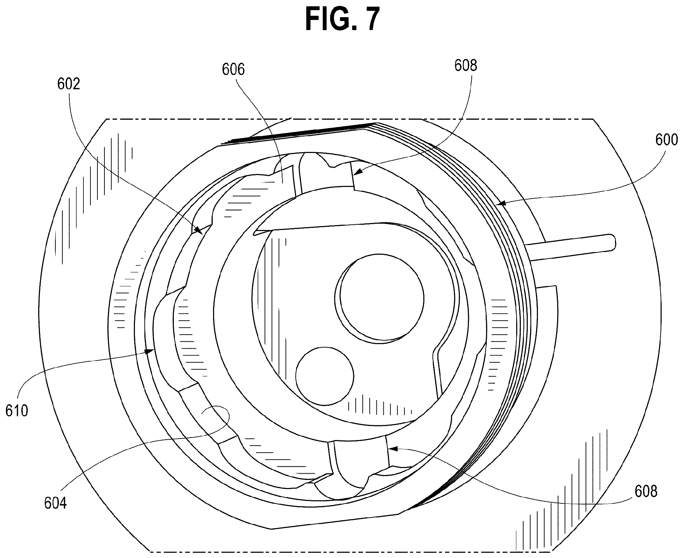

Fig. 7 depicts the housing 600 of the handle driven mechanism 418 of Fig. 5 in isolation. The housing 600 may include a pocket 602 that accommodates the anti-reverse bearing 500 of Fig. 6. The pocket 602 may define an inner circumferential surface 604 that faces the circumferential edge 516 of the clutch 502 when positioned in the pocket. The inner circumferential surface 604 may extend axially between an open end of the pocket 602 and an axial shoulder 606. The axial shoulder 606 may face the second axial end 510 of the clutch 502 when positioned in the pocket 602. Anti-rotation features 608 may be located on the axial shoulder 606. The inner circumferential surface 604 may include positioning features 610 positioned thereon.

The anti-rotation features 608 may complement the anti-rotation elements 512 of the clutch 502. For example, the anti-rotation features 608 may be female features that complement male anti-rotation elements 512. The female anti-rotation features 608 may depend axially into the shoulder 606. In some embodiments, the anti-rotation features 608 include slots, keyways, grooves, recesses, and the like. In some embodiments, one or more of the anti-rotation features 608 may be male features extending axially from the shoulder 606 towards the second axial end 510 of the clutch 502. The male anti-rotation features 608 may complement female anti-rotation elements 512 of the clutch 502. For example, the male anti-rotation features 608 may include tabs, keys, protrusions, and the like, that extend axially from the shoulder 606. In some embodiments, the anti-rotation features 608 may include both male and female features. A number of the anti-rotation features 608 may complement the number of anti-rotation elements 512 of the clutch 502. For example, the number of anti-rotation features 608 may be the same as or greater than the number of anti-rotation elements 512 of the clutch 502. The anti-rotation features 608 are suitably defined at angular locations on the shoulder 606 corresponding to the angular locations of the anti-rotation elements 512 at the second axial end 510 of the clutch 502.

The positioning features 610 may complement the positioning elements 514 of the clutch 502. For example, the positioning features 610 may be female features that depend radially into the inner circumferential surface 604. The female positioning features 610 may complement the male positioning elements 514 of the clutch 502. In some embodiments, the female positioning features 610 may include slots, keyways, grooves, recesses, and the like. In some embodiments, one or more of the positioning features 610 may be male features extending radially inwardly from the inner circumferential surface 604. The male positioning features 610 may complement the female positioning elements 514 of the clutch 502. For example, the male positioning features 610 may include lobes, arcs, tabs, keys, protrusions, and the like, that extend radially inwardly from the inner circumferential edge 516. In some embodiments, the positioning features 610 may include both male and female features. A number of the positioning features 610 may complement the number of positioning elements 514 of the clutch 502. For example, the number of positioning features 610 may be the same as or greater than the number of positioning elements 514 of the clutch 502. The positioning features 610 are suitably defined at angular locations on the inner circumferential surface 604 corresponding to the angular locations of the positioning elements 514 on the circumferential edge 516 of the clutch 502. In some embodiments, the positioning features 610 may be omitted. For example, the clutch 502 may not include positioning elements and, correspondingly, the housing 600 may not include positioning features. For example, the circumferential edge 516 and/or the inner circumferential surface 604 may be substantially cylindrical without any elements or features machined therein for anti-rotation or positioning purposes.

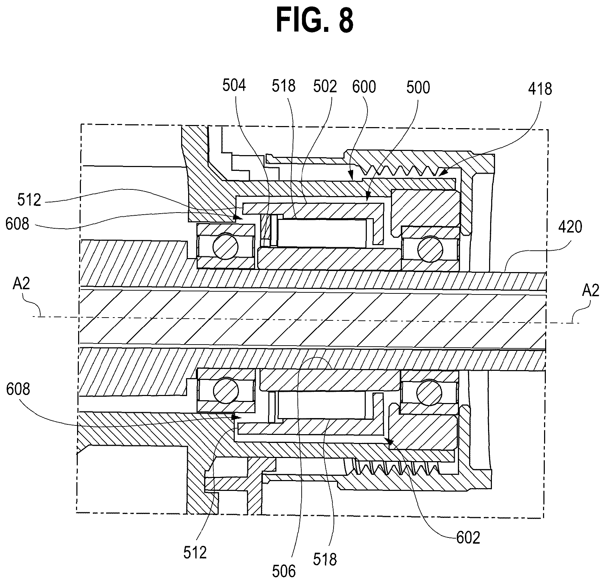

Fig. 8 depicts the anti-reverse bearing 500 positioned in the pocket 602 of the housing 600. The pinion 420 may be keyed within the keyway 506 of the inner ring 504 of the anti-reverse bearing 500. The inner ring 504 may co-rotate with the pinion 420 about the rotational axis A2. The anti-reverse bearing 500 may operate to allow rotation of the pinion 420 in a first rotational direction about the rotational axis A2 and substantially limit or restrict rotation of the pinion in a second rotational direction about the rotation axis A2. The first rotational direction may correspond to winding a fishing line on the spool 406 and the second rotational direction may correspond to unwinding a fishing line from the spool 406. As such, the anti-reverse bearing 500 may operate to allow the user to rotate the handle 412 to retrieve the fishing line and limit or prevent inadvertent or premature unwinding of the spool 406.

The anti-reverse bearing 500 may operate similar to the anti-reverse bearing 102 described above to substantially limit or restrict rotation of the pinion 420 in a second rotational direction about the rotation axis A2. For example, the anti-reverse bearing 500 may include rollers 518 between the inner ring 504 and the clutch 502. Similar to the rollers 114 and the clutch 112 described above, the rollers 518 and the clutch 502 may cooperate to allow rotation of the pinion 420 and the inner ring 504 in the first rotational direction and substantially limit or restrict rotation of the pinion and the inner ring in the second rotational direction. For example, the clutch 502 may include cam slots similar to the cam slots 116 described above that correspond to the rollers 518. The cam slots may guide radial movement of the rollers 518 between the clutch 502 and the inner ring 504 during rotation of the inner ring. When the inner ring 504 is rotated in the first rotational direction, the rollers 518 may move radially away from the inner ring 504 to allow rotation of the inner ring in the first rotational direction. When the inner ring 504 is rotated in the second rotational direction, the rollers 518 may move radially towards the inner ring 504 and engage between the clutch 502 and the inner ring to substantially limit or restrict rotation of the inner ring in the second rotational direction.

The anti-rotation elements 512 of the clutch 502 may engage with the anti-rotation features 608 of the housing 600 to limit or restrict rotation of the clutch relative to the housing. For example, male anti-rotation elements 512 of the clutch 502 may be received by female anti-rotation features 608 of the housing 600 and engage therein to limit or restrict rotation of the clutch relative to the housing. Additionally, or alternatively, female anti-rotation elements 512 of the clutch 502 may receive male anti-rotation features 608 of the housing 600 and engage therewith to limit or restrict rotation of the clutch relative to the housing. In some embodiments, an elastic member, such as an elastic seal or gasket, may be positioned between the anti-rotation element 512 and the corresponding anti-rotation feature 608 to provide compliance therebetween.

The anti-reverse bearing 500 can reduce tolerance stacking between the anti-rotation interface of the clutch 502 and the housing 600 and the clutch interface between the rollers 518, the clutch 502, and the inner ring 504, thereby reducing the risk of uneven or maldistributed loading on the inner ring, slippage of the rollers, and/or noise. For example, the anti-rotation elements 512 and the anti-rotation features 608 may engage at an axial interface, which is directionally offset from the radial direction in which the rollers 518 move between the clutch 502 and the inner ring 504. In this way, tolerance stack between machined clutch features, such as cam slots of the clutch, and machined anti-rotation elements is reduced.

An additional advantage of the anti-reverse bearing 500 may include reducing, or eliminating, reliance on the radial positioning elements 514 and positioning features 610 to provide anti-rotation control of the clutch 502 relative to the housing 600. This may be enabled by controlling anti-rotation between the clutch 502 and the housing 600 via the axially directed anti-rotation elements 512 and features 608. In this way, radially extending anti-rotation elements may be omitted from the circumferential edge 516 of the clutch 502. The positioning elements 514 and positioning features 610 may be included, for example, to align, orient, and/or locate the clutch 502 in the pocket 602. Relatively substantial clearance may be allowed between the positioning elements 514 and features 610 such that the positioning elements and features do not substantially limit rotation of the clutch 502 relative to the housing 600. As such, tolerance between the positioning elements 514 and positioning features 610 can increase without creating misalignment, loading, noise, or other issues. Alternatively, the positioning elements 514 and the positioning features 610 could be eliminated entirely, making the machining process simpler and more efficient.

Another advantage of the anti-reverse bearing 500 may include reducing the size requirements of the housing 600. For example, the axial anti-rotation interface between the clutch 502 and the housing 600 may reduce, or eliminate, an increase in diameter of the clutch that may otherwise be created by relying on a radial anti-rotation interface. In this way, the diameter of the clutch 502, and thereby the size of the housing 600, can be reduced.

Another advantage of the anti-reverse bearing 500 may include a simpler and more efficient manufacturing process for the components of the anti-reverse bearing, such as the clutch 502. For example, as discussed above, the clutch 502 can be provided with simpler radial features with lower tolerance requirements. Additionally, the clutch 502 can be fabricated as a one-piece unit, with the anti-rotation elements 512 machined in a single extruded, cast, or drawn component.

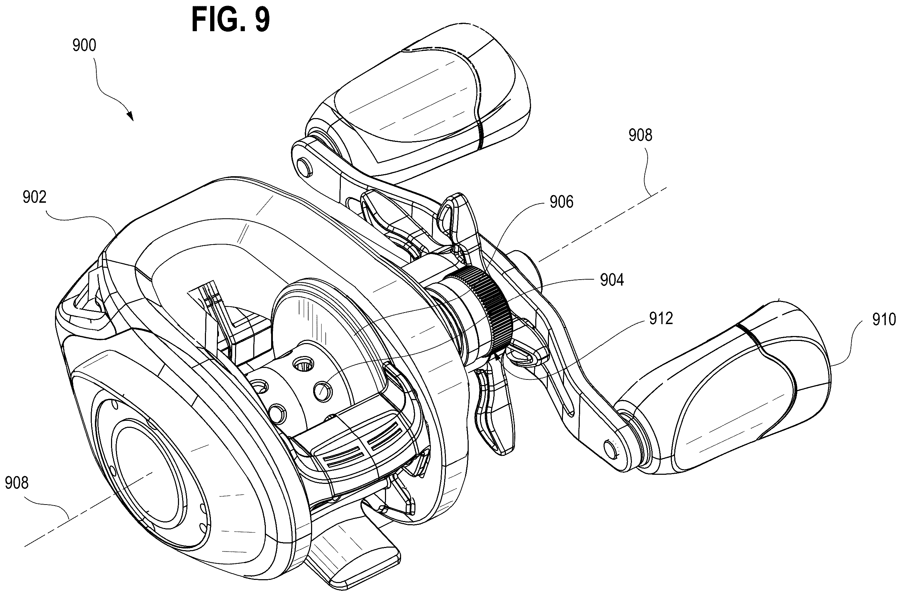

In some embodiments, the anti-reverse bearings of this disclosure can be used in other types of fishing reels, such as baitcasting reels. Referring to Fig. 9, one example of a baitcasting reel is indicated generally at 900. The reel 900 may include a housing 902, a shaft 904, and a spool 906. The shaft 904 is preferably supported in the housing 902 and is rotatable relative to the housing 902 around a shaft axis 908 extended in a longitudinal direction of the shaft 904, along a width direction of the fishing reel 900. The spool 906 may be coupled to the shaft 904 such that the spool 906 rotates with the shaft 904 around the shaft axis 908 for winding a fishing line (not shown) with respect to the fishing reel 900. The fishing reel 900 may also include a handle 910 for manually turning the shaft 904 and the spool 906 for winding and unwinding the fishing line with respect to the fishing reel 900. The handle 910 may be rotationally operated to drive a handle driven mechanism 912, also referred to as a handle driven assembly, of the reel 900. The fishing reel 900 may include a driving force transmission mechanism that transmits a rotational driving force from the handle driven mechanism 912 to the shaft 904 when the handle 910 is rotationally operated. In some embodiments, an anti-reverse bearing including aspects of the anti-reverse bearings described herein can be incorporated in the handle driven mechanism 912 to selectively limit or restrict rotation of the shaft 904 and spool 906 in an unwinding direction about the axis 908.

From the foregoing, it will be seen that the various embodiments of the present disclosure are well adapted to attain all the objectives and advantages hereinabove set forth together with still other advantages which are obvious and which are inherent to the present structures. It will be understood that certain features and sub-combinations of the present embodiments are of utility and may be employed without reference to other features and sub-combinations. Since many possible embodiments of the present disclosure may be made without departing from the spirit and scope of the present disclosure, it is also to be understood that all disclosures herein set forth or illustrated in the accompanying drawings are to be interpreted as illustrative only and not limiting. The various constructions described above and illustrated in the drawings are presented by way of example only and are not intended to limit the concepts, principles and scope of the present disclosure.

Many changes, modifications, variations and other uses and applications of the present disclosure will, however, become apparent to those skilled in the art after considering the specification and the accompanying drawings. All such changes, modifications, variations and other uses and applications which do not depart from the spirit and scope of the disclosure are deemed to be covered by the invention which is limited only by the claims which follow.

## Claims

1. An anti-reverse bearing assembly for a fishing reel (400), the anti-reverse bearing assembly comprising:
an inner ring (504) co-rotatable with a rotating component of the reel about a rotational axis;
a clutch (502) positioned radially outward of the inner ring, the clutch extending relative to the rotational axis between a first axial end and a second axial end, the clutch including anti-rotation elements (512) located at the second axial end, the clutch (502) and the anti-rotation elements (512) being optionally formed as a one-piece unit; and
rollers (518) positioned between the clutch and the inner ring, the rollers moveable radially relative to the rotational axis to allow the inner ring to rotate in a first rotational direction and to limit rotation of the inner ring in a second rotational direction,
wherein the anti-rotation elements (512) of the clutch are engageable within a housing (600) of the reel to limit rotation of the clutch relative to the housing.

2. The anti-reverse bearing assembly of claim 1, wherein the anti-rotation elements (512) include male elements engageable with female anti-rotation features (608) within the housing (600) of the reel.

3. The anti-reverse bearing assembly of claim 1 or 2, wherein the clutch (502) has an outer circumferential edge (516), and wherein the clutch does not include anti-rotation elements on the outer circumferential edge, the clutch (502) optionally including positioning elements (514) on the outer circumferential edge (516), the positioning elements complementing positioning features (610) within the housing of the reel.

4. The anti-reverse bearing assembly of any of claims 1 to 3, wherein the clutch (502) includes two anti-rotation elements, the anti-rotation elements (512) being optionally circumferentially spaced at 180° intervals.

5. A handle driven assembly (912) for a fishing reel, the handle driven assembly comprising:
a housing (600) defining a pocket (602) having an inner radial surface (604) and an axial shoulder (606) extending from the inner radial surface, wherein the axial shoulder includes anti-rotation features (608);
a rotating component (420) drivable within the pocket via a handle about a rotational axis; and
an anti-reverse bearing (500) positioned within the pocket, the anti-reverse bearing comprising:
an inner ring (504) co-rotatable with the rotating component about the rotational axis;
a clutch (502) positioned radially outward of the inner ring, the clutch extending relative to the rotational axis between a first axial end and a second axial end, the clutch including anti-rotation elements (512) located at the second axial end, the clutch (502) and the anti-rotation elements (512) being optionally formed as a one-piece unit; and
rollers (518) positioned between the clutch and the inner ring, the rollers moveable radially relative to the rotational axis to allow the inner ring and the rotating component to rotate in a first rotational direction and to limit rotation of the inner ring and the rotating component in a second rotational direction; and
wherein the anti-rotation elements (512) of the clutch are engageable with the anti-rotation features (608) of the housing to limit rotation of the clutch relative to the housing.

6. The handle driven assembly of claim 5, wherein the rotating component (420) includes a pinion keyed in the inner ring (504).

7. The handle driven assembly of claim 5 or 6, wherein the anti-rotation elements (512) include male elements and the anti-rotation features include female features (608).

8. The handle driven assembly of any of claims 5 to 7, wherein an anti-rotation interface is not created between the inner radial surface (604) of the housing (600) and an outer circumferential edge (516) of the clutch.

9. The handle driven assembly of any of claims 5 to 8, wherein the clutch (502) includes positioning elements (514) on the outer circumferential edge (516), the positioning elements complementing positioning features (610) on the inner radial surface.

10. The handle driven assembly of claim 9, wherein a clearance is provided between each positioning element (514) and a corresponding positioning feature (610), such that the positioning elements and the corresponding positioning features can locate and orient the clutch in the pocket and do not substantially limit rotation of the clutch relative to the housing.

11. A fishing reel (400) comprising:
a handle (412);
a spool (406); and
a handle driven mechanism (912) to control winding a fishing line on the spool via operation of the handle, the handle driven mechanism comprising:
a housing (600) defining a pocket (602) having an inner radial surface (504) and an axial shoulder (606) extending from the inner radial surface, wherein the axial shoulder includes anti-rotation features (608);
a rotating component (420) drivable within the pocket via the handle about a rotational axis, wherein rotation of the rotating component in a first rotational direction corresponds to winding the fishing line on the spool; and
an anti-reverse bearing (500) positioned within the pocket, the anti-reverse bearing comprising:
an inner ring (504) co-rotatable with the rotating component about the rotational axis;
a clutch (502) positioned radially outward of the inner ring, the clutch extending relative to the rotational axis between a first axial end and a second axial end, the clutch including anti-rotation elements (512) located at the second axial end, the clutch (502) and the anti-rotation elements (512) being optionally formed as a one-piece unit; and
rollers (518) positioned between the clutch and the inner ring, the rollers moveable radially relative to the rotational axis to allow the inner ring and the rotating component to rotate in the first rotational direction and to limit rotation of the inner ring and the rotating component in a second rotational direction; and
wherein the anti-rotation elements (512) of the clutch are engageable with the anti-rotation features (608) of the housing to limit rotation of the clutch relative to the housing.

12. The fishing reel of claim 11, wherein the fishing reel is a spinning reel.

13. The fishing reel of claim 11 or 12, wherein the anti-rotation elements (512) include male elements and the anti-rotation features (608) include female features.

14. The fishing reel of any of claims 11 to 13, wherein an anti-rotation interface is not created between the inner radial surface (604) of the housing (600) and an outer circumferential edge (516) of the clutch.

15. The fishing reel of any of claims 11 to 14, wherein:
the clutch (502) includes positioning elements (514) on an outer circumferential edge (516), the positioning elements complementing positioning features (610) in the inner radial surface, and
a clearance is provided between each positioning element and a corresponding positioning feature, such that the positioning elements and the corresponding positioning features can locate and orient the clutch in the pocket and do not substantially limit rotation of the clutch relative to the housing.
